# EUROPEAN PATENT SPECIFICATION

(11) **EP 3 000 967 B1**
(45) Date of publication and mention of the grant of the patent: **21.08.2019**
(21) Application number: 15187402.1
(22) Date of filing: 29.09.2015
(51) Int. Cl.: F01D 5/08, F01D 5/30

(54) **GAS TURBINE ROTOR ASSEMBLY AND METHOD OF ASSEMBLY**
ROTORANORDNUNG EINER GASTURBINE UND VERFAHREN ZUR MONTAGE
ENSEMBLE ROTOR POUR TURBINE À GAZ ET MÉTHODE DE MONTAGE

(30) Priority: 29.09.2014 US 201462056641 P; 16.02.2015 US 201514623416
(43) Date of publication of application: 30.03.2016
(73) Proprietor: United Technologies Corporation, Farmington, CT 06032 (US)
(72) Inventor: HIMES, Jason D., Tolland, CT Connecticut 06084 (US); VIRKLER, Scott D., Ellington, CT Connecticut 06029 (US); TRESSER, Jordan, Marlborough, CT Connecticut (US); MECKLENBURG, Dwayne K., Stafford Springs, CT Connecticut 06076 (US); WILSON, Ross, South Glastonbury, CT Connecticut 06073 (US); GRIFFIN, David Richard, Tolland, CT Connecticut 06084 (US)
(74) Representative: Dehns

(56) References cited:
- WO-A1-99/47792
- US-A- 5 941 687
- US-A1- 2005 207 892

## Description

### BACKGROUND

This disclosure relates to a gas turbine engine rotor assembly and a method of assembly thereof.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

In some gas turbine engines, some sections of the gas turbine engines, rotors include exposed to significant temperatures, requiring active cooling. The active cooling is typically provided by passing a coolant, such as engine air, through internal passages in the rotor. Coolant is provided to the rotor blades through a radially extending opening in the root of each rotor blade. As the coolant is delivered to the rotor blade, the coolant comes in contact with the rotor disk supporting the rotor blades and causes a cooling effect on the outer periphery of the rotor disk. The cooling effect on the rotor disk can cause or exacerbate thermal gradients present in the rotor disk.

US 5941687 discloses a gas turbine engine turbine system, in which , when cooling air from a gas turbine engine compressor is supplied in greater quantities than is needed, the flow thereof is reduced firstly and mainly by ensuring that the air leaves a blade stage cooling thereby at a radius less than that of its entry. A pressure head results which slows the cooling air flow rate prior to its entering a plenum chamber defined by the disc of the stage and fixed structure.

WO9947792 discloses a prior art cooled rotor disk assembly.

### SUMMARY

The present invention provides a gas turbine engine rotor assembly as defined in claim 1 and a method of assembling a turbine stage according to claim 12.

According to the invention, the heat shield separates the cavity into a first passage adjacent to the root and a second passage on a side of the heat shield opposite the root.

In a further embodiment of any of the above, the rotor disk has a forward side and an aft side. The heat shield includes a longitudinal portion that extends from the forward side to the aft side.

In a further embodiment of any of the above, axial retention feature is a forward flange that extends from the longitudinal portion and obstructs the second passage.

In a further embodiment of any of the above, the axial retention feature is an aft flange that extends from the longitudinal portion and engages the aft side.

In a further embodiment of any of the above, the axial retention feature is an aft flange that extends from the longitudinal portion and engages the root.

In a further embodiment of any of the above, the longitudinal portion includes lateral sides that each have a longitudinal protrusion captured between the root and the rotor disk. The longitudinal protrusion spaces the heat shield from the rotor disk to provide the second passage.

In a further embodiment of any of the above, a cover is secured over a side of the rotor disk. The cover provides the axial retention feature.

In a further embodiment, a turbine section includes a rotatable turbine stage. The blade includes a cooling passage that extends to the root. The heat shield separates the cavity into a first passage adjacent to the root and a second passage on a side of the heat shield opposite the root. A cooling source is in fluid communication with the first passage. The cooling source is configured to supply a cooling fluid to the cooling passage via the first passage.

In a further embodiment of the above, the rotor disk has a forward side and an aft side. The heat shield includes a longitudinal portion that extends from the forward side to the aft side.

In a further embodiment of any of the above, axial retention feature is a forward flange that extends from the longitudinal portion and obstructs the second passage.

In a further embodiment of any of the above, the axial retention feature is an aft flange that extends from the longitudinal portion and engages the aft side.

In a further embodiment of any of the above, the axial retention feature is an aft flange that extends from the longitudinal portion and engages the root.

In a further embodiment of any of the above, the longitudinal portion includes lateral sides that each have a longitudinal protrusion captured between the root and the rotor disk. The longitudinal protrusion spaces the heat shield from the rotor disk to provide the second passage.

In a further embodiment of any of the above, the turbine section includes a high pressure turbine and a low pressure turbine that is arranged downstream from the high pressure turbine. The rotatable stage is arranged in the high pressure turbine.

In a further embodiment of any of the above, the high pressure turbine includes first and second stages. The rotatable stage provides the first stage.

In a further embodiment of any of the above, the high pressure turbine includes first and second stages. The rotatable stage provides the second stage.

The present invention further provides a method of assembling a rotatable turbine stage as defined in claim 12.

In a further embodiment of the above method, the inserting step includes moving the heat shield radially inward to seat a forward axial retention feature relative to a forward side of the rotor disk. An aft axial retention feature is seated relative to an aft side of the rotor disk.

In a further embodiment of any of the above methods, the installing step includes axially sliding the root into the slot and capturing lateral sides of the heat shield between the root and the rotor disk.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 schematically illustrates a high pressure turbine of the gas turbine engine shown in Figure 1.
Figure 3 is a cross-sectional view through a rotor stage of the high pressure turbine in Figure 2 with a heat shield.
Figure 4 is a perspective view of one example heat shield, shown in Figure 3.
Figures 5A and 5B are forward and aft end views of the heat shield of Figure 4.
Figure 6 is a perspective view of a heat shield installed into a rotor disk.
Figures 7A and 7B illustrate steps of assembling the rotor stage.
Figure 8 illustrates an example axial retention feature.
Figure 9 illustrates another example axial retention feature.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

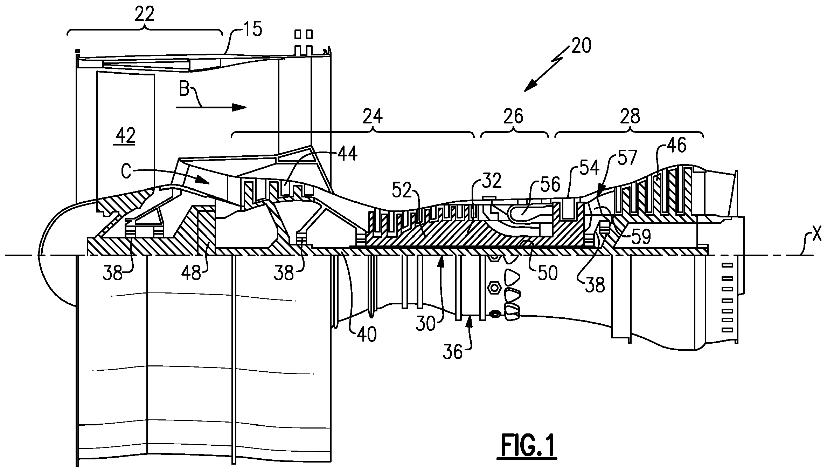

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct at least partially defined within a fan case 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

Moreover, although a commercial gas turbine engine embodiment is illustrated, it should be understood that the disclosed component cooling configuration can be used in other types of engines, such as military and/or industrial engines.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10,668 meters (35,000 feet). The flight condition of 0.8 Mach and 10,668 meters (35,000 feet), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 350.5 m/s (1150 ft/s).

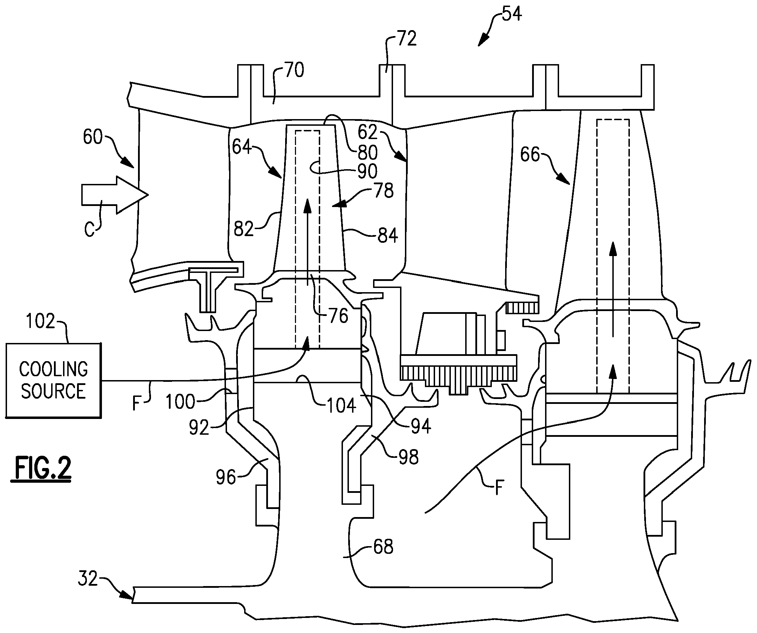

Referring to Figure 2, a cross-sectional view through a high pressure turbine section 54 is illustrated. In the example high pressure turbine section 54, first and second arrays of circumferentially spaced fixed vanes 60, 62 are axially spaced apart from one another. A first stage array of circumferentially spaced turbine blades 64, mounted to a rotor disk 68, is arranged axially between the first and second fixed vane arrays. A second stage array of circumferentially spaced turbine blades 66 is arranged aft of the second array of fixed vanes 62.

The turbine blades each include a tip 80 adjacent to a blade outer air seal 70 of a case structure 72. The first and second stage arrays of turbine vanes and first and second stage arrays of turbine blades are arranged within a core flow path C and are operatively connected to a spool 32.

A root 74 of each turbine blade 64 is mounted to the rotor disk 68 within a slot 104. The turbine blade 64 includes a platform 76, which provides the inner flow path, supported by the root 74. An airfoil 78 extends in a radial direction from the platform 76 to the tip 80. The airfoil 78 provides leading and trailing edges 82, 84.

The airfoil 78 includes a cooling passage 90, which may be one or more discrete passages arranged in a configuration suitable for the given application. Forward and aft covers 96, 98 are respectively provided at forward and aft sides 92, 94 of the rotor disk 68. An aperture 100 is provided in the forward cover 96 and is in fluid communication with a cooling source 102, such as compressor bleed air. The cooling source 102 supplies cooling fluid F through the aperture 100 to the cooling passage 90 along an axial direction via the slot 104.

Supplying the cooling fluid axially causes the cooling fluid F to contact, and thereby cool, the radially outward edge, or periphery, of the rotor disk 68 in conventional rotor assemblies. This cooling introduces thermal gradients, or increases existing thermal gradients on the rotor disk 68, which can reduce the expected lifespan of the rotor assembly.

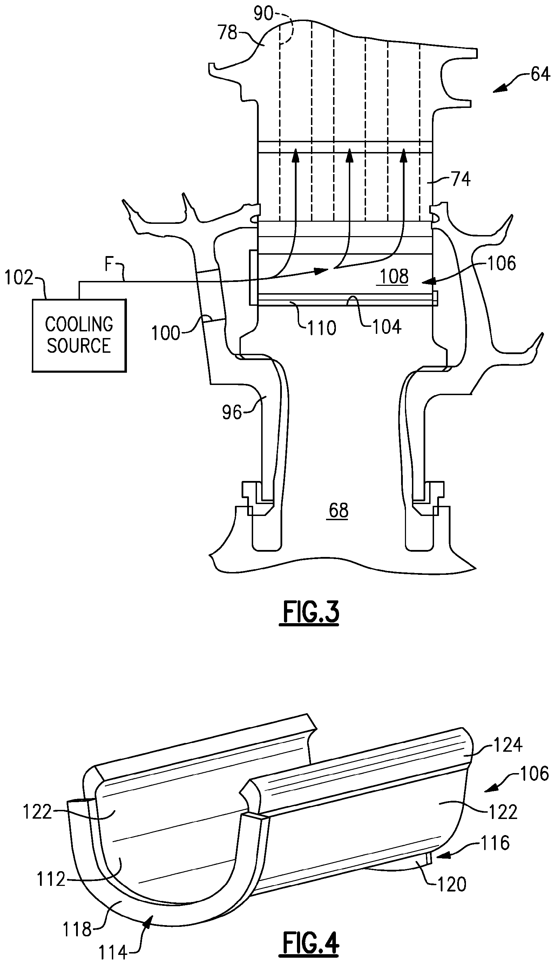

In order to protect the rotor disk 68 from increased thermal gradients, and to reduce the cooling effect that the coolant in the slot 104 has on the rotor disk 68, a heat shield 106 is disposed radially inward of the root 74, as best shown in Figure 3.

The heat shield 106 separates the slot 104 into first and second passages 108, 110. The first passage 108 is in fluid communication with the cooling source 102 and the cooling passage 90. The second passage 108 acts to insulate the rotor disk 68 from the thermal gradients caused by the cooling fluid F.

It is desirable to axially locate and retain the heat shield 106 relative to the rotor disk 68 throughout engine operation. To this end, first and second axial retention features 114, 116 are used to prevent axial movement of the heat shield 106.

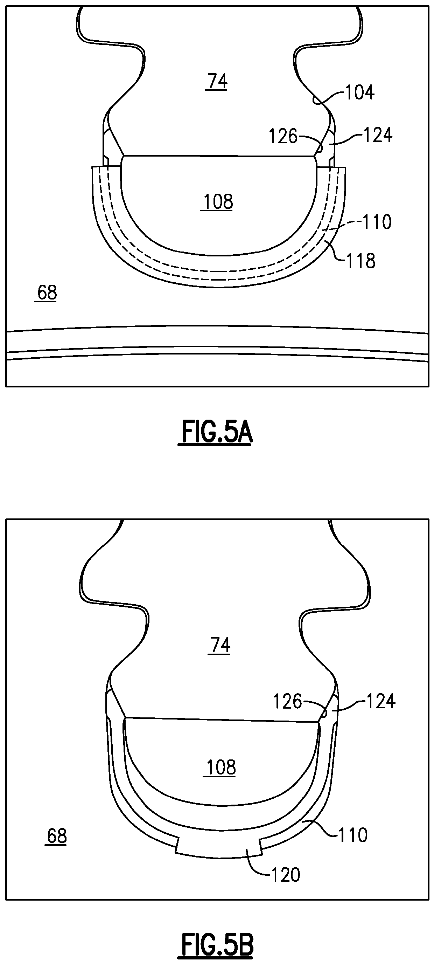

Referring to Figures 3-5B, the heat shield 106 includes a longitudinal portion 112 with the first and second axial retention features 114, 116 at opposing ends. In one example, the first axial retention feature 114 is provided by an arcuate forward flange 118 that seats against the forward side 92 of the rotor disk 68. The forward flange 118 prevents the heat shield 106 from moving aftward and obstructs the flow of cooling fluid F into the second passage 110. The second axial retention feature 116 is provided by a relatively smaller aftward flange 120 that seats against the aft side 94 of the rotor disc 68 to prevent forward motion of the heat shield 106.

The flanges act as a retention tabs, and maintain a position of the heat shield relative to the rotor disk. The flanges further provide a tighter fit between the heat shield, the rotor blade root and the rotor disk. The tighter fit reduces vibrations that can occur as the rotor is being brought up to speed or stopped. The vibrations can reduce the expected lifespan of the heat shield.

The longitudinal portion 112 includes lateral sides 124 that are captured between lateral faces 126 of the root 74 and the rotor disk 68. Longitudinal protrusions 124 on the lateral sides 124 space the heat shield 106 from the sides of the slot 104 to minimize conduction between the heat shield and rotor disk 68.

In the example embodiments shown, the longitudinal portion 112 of the heat shield 106 extends an entire axial length of the rotor disk 68.

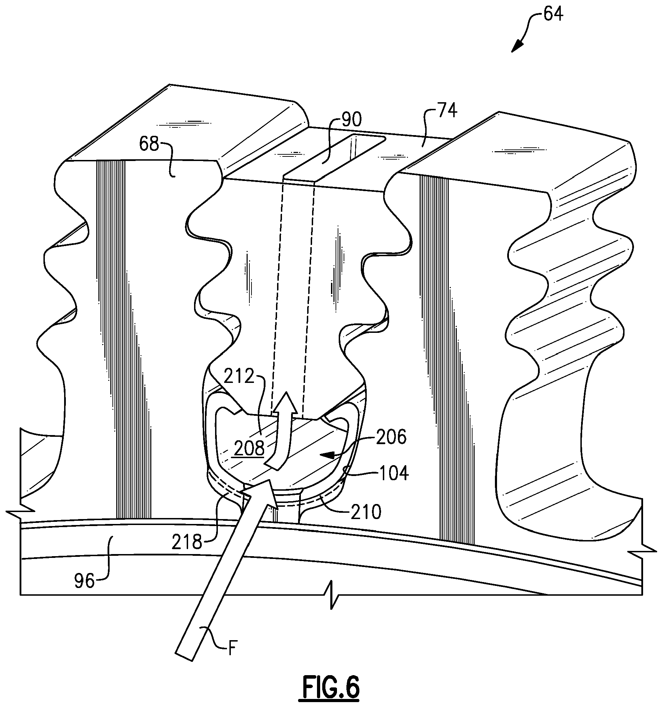

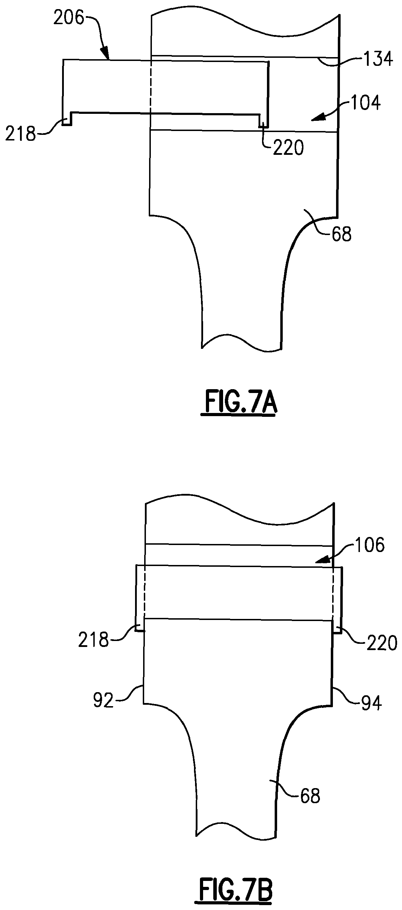

Referring to Figures 6-7B, in the example embodiments, the heat shield 206 is a separate component from the rotor blade 64. During assembly of the rotor assembly, the heat shield 206 is inserted into the slot 104 and beneath an undulation 134 prior to installation of the rotor blade 64, as shown in Figure 7A. The heat shield 206 is moved radially inward to seat the heat shield 206 in the slot 104, so that forward and aft flanges 218, 220 are seated with respect to the forward and aft sides 92, 94 of the rotor disk 68 (Figure 7B). The longitudinal portion 212 separates the slot 104 into first and second passages 208, 210. When the rotor blade 64 is inserted (Figure 6), the root 74 of the rotor blade 64 retains the heat shield 206 in position relative to the rotor disk 68. The covers 96, 98 (only forward cover shown) are then installed onto the rotor disk 68.

The separate heat shield 206 can be constructed of the same material as the rotor blade 64, or another material having a more desirable heat tolerance. In some examples, depending on where the heat shield 206 is incorporated into an engine, the heat shield could be constructed of nickel superalloys, titanium aluminide, ceramic matrix composites, or any similar materials. The heat shield may be machined, cast, additively manufactured and/or plastically formed, such as be sheet metal stamping.

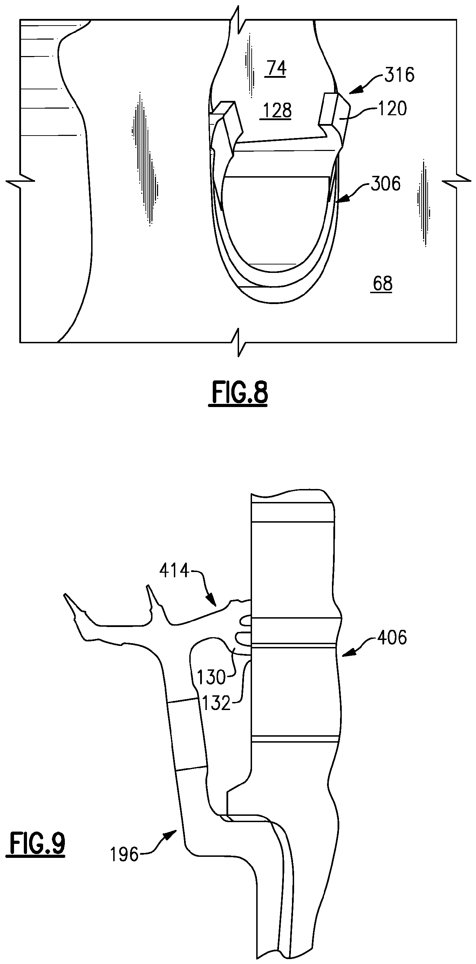

Another example heat shield 306 is shown in Figure 8. The heat shield 306 includes axial retention feature 316 provided by spaced apart tabs 120 that engage an end face 128 of the root 74, rather than the rotor disk 68.

In the example shown in Figure 9, the axial retention feature 414 is provided by a finger 130 that extends from the cover 196 to engage an edge 132 of the heat shield 406.

Although the heat shield is shown in the first stage of the high pressure turbine, such a heat shield may be used in any stage of the gas turbine engine.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although example embodiments have been disclosed, a worker of ordinary skill in this art would recognize that certain modifications would come within the scope of the claims. For that and other reasons, the following claims should be studied to determine their true scope and content.

## Claims

1. A gas turbine engine rotor assembly comprising:
a rotor disk (68) with a slot (104); and
a rotor blade (64) having a root (74) supported within the slot (104), wherein the blade (64) includes a cooling passage (90) that extends to the root (74);
a heat shield (106, 206) arranged in a cavity in the slot (104) between the root (74) and the rotor disk (68), wherein the heat shield (106, 206) separates the cavity into a first passage (108;208) adjacent to the root (70) and a second passage (110;210) on a side of the heat shield (106, 206) opposite the root (74);
a cooling source (102) in fluid communication with the first passage (108;208), the cooling source (102) configured to supply a cooling fluid to the blade cooling passage (90) via the first passage (108;208);
**characterised in that** it further comprises an axial retention feature (114, 218) configured to axially maintain the heat shield (106, 206) within the slot (104) and configured to block a flow of the cooling fluid to the second passage (110; 210).

2. A turbine section comprising:
a rotatable turbine stage that includes the rotor assembly of claim 1.

3. The rotor assembly according to claim 1 or turbine section according to claim 2, wherein the rotor disk (68) has a forward side (92) and an aft side (94), and the heat shield (106) includes a longitudinal portion (112) that extends from the forward side (92) to the aft side (94).

4. The rotor assembly or turbine section according to claim 3, wherein the axial retention feature is a forward flange (118;218) that extends from the longitudinal portion (112) and obstructs the second passage (110;210).

5. The rotor assembly or turbine section according to claim 3 or 4, wherein the axial retention feature is an aft flange that extends from the longitudinal portion (112) and engages the aft side (94).

6. The rotor assembly or turbine section according to claim 3 or 4, wherein the axial retention feature is an aft flange that extends from the longitudinal portion and engages the root (74).

7. The rotor assembly or turbine section according to any of claims 3 to 6, wherein the longitudinal portion (112) includes lateral sides (124) that each have a longitudinal protrusion (124) captured between the root (74) and the rotor disk (68), the longitudinal protrusion (124) spacing the heat shield (106) from the rotor disk (68) to provide the second passage (110;210).

8. The rotor assembly or turbine section according to any of claims 1 to 3, comprising a cover (196) secured over a side of the rotor disk (68), the cover (196) providing the axial retention feature (414).

9. The turbine section according to any of claims 2 to 8, wherein the turbine section (28) includes a high pressure turbine (54) and a low pressure turbine (46) that is arranged downstream from the high pressure turbine (54), the rotatable stage being arranged in the high pressure turbine (54).

10. The turbine section according to claim 9, wherein the high pressure turbine (54) includes first and second stages, the rotatable stage provides the first stage.

11. The turbine section according to claim 9, wherein the high pressure turbine (54) includes first and second stages, the rotatable stage provides the second stage.

12. A method of assembling a rotatable turbine stage, the method comprising the steps of:
inserting a heat shield (106, 206) into a slot (104) of a rotor disk (68);
installing a blade (64) into the slot (104), wherein the heat shield (106, 206) is inserted in a cavity in the slot (104) between a root (74) of the blade (64) and the rotor disk (68), the blade (64) including a cooling passage (90) that extends to the root (74), wherein the heat shield (106, 206) separates the cavity into a first passage (108;208) adjacent to the root (70) and a second passage (110;210) on a side of the heat shield (106, 206) opposite the root (74), wherein a cooling source (102) is configured to supply a cooling fluid to the cooling passage (90) via the first passage (108; 208); and **characterised in that** it further comprises the step of axially retaining the heat shield (106, 206) in the slot (104) with an axial retention feature (114, 118) configured to block a flow of the cooling fluid to the second passage (110; 210).

13. The method according to claim 12, wherein the inserting step includes moving the heat shield (206) radially inward to seat a forward axial retention feature relative to a forward side (92) of the rotor disk (68), and to seat an aft axial retention feature relative to an aft side (94) of the rotor disk (68).

14. The method according to claim 13, wherein the installing step axially sliding the root (74) into the slot (104) and capturing lateral sides (124) of the heat shield (106) between the root (74) and the rotor disk (68).

## Patentansprüche

1. Rotoranordnung eines Gasturbinentriebwerks, umfassend:
ein Laufrad (68) mit einem Schlitz (104), und
eine Laufschaufel (64), die einen Fuß (74) aufweist, der innerhalb des Schlitzes (104) gestützt ist, wobei die Laufschaufel (64) einen Kühldurchlass (90) beinhaltet, der sich zu dem Fuß (74) erstreckt;
einen Hitzeschild (106, 206), der in einem Hohlraum in dem Schlitz (104) zwischen dem Fuß (74) und dem Laufrad (68) angeordnet ist, wobei der Hitzeschild (106, 206) den Hohlraum in einen ersten Durchlass (108;208), der zu dem Fuß (70) benachbart ist, und einen zweiten Durchlass (110;210) an einer Seite des Hitzeschilds (106, 206) gegenüber von dem Fuß (74) unterteilt;
eine Kühlquelle (102) in Fluidverbindung mit dem ersten Durchlass (108;208), wobei die Kühlquelle (102) dazu konfiguriert ist, dem Laufschaufelkühldurchlass (90) über den ersten Durchlass (108;208) ein Kühlfluid zuzuführen;
**dadurch gekennzeichnet, dass** sie ferner ein axiales Rückhaltemerkmal (114, 218) umfasst, das dazu konfiguriert ist, den Hitzeschild (106, 206) axial innerhalb des Schlitzes (104) zu halten, und dazu konfiguriert ist, eine Strömung des Kühlfluids zu dem zweiten Durchlass (110; 210) zu blockieren.

2. Turbinenabschnitt, umfassend:
eine drehbare Turbinenstufe, die die Rotoranordnung nach Anspruch 1 beinhaltet.

3. Rotoranordnung nach Anspruch 1 oder Turbinenabschnitt nach Anspruch 2, wobei das Laufrad (68) eine vordere Seite (92) und eine hintere Seite (94) aufweist und der Hitzeschild (106) einen Längsabschnitt (112) beinhaltet, der sich von der vorderen Seite (92) zu der hinteren Seite (94) erstreckt.

4. Rotoranordnung oder Turbinenabschnitt nach Anspruch 3, wobei das axiale Rückhaltemerkmal ein vorderer Flansch (118;218) ist, der sich von dem Längsabschnitt (112) erstreckt und den zweiten Durchlass (110;210) behindert.

5. Rotoranordnung oder Turbinenabschnitt nach Anspruch 3 oder 4, wobei das axiale Rückhaltemerkmal ein hinterer Flansch ist, der sich von dem Längsabschnitt (112) erstreckt und die hintere Seite (94) in Eingriff nimmt.

6. Rotoranordnung oder Turbinenabschnitt nach Anspruch 3 oder 4, wobei das axiale Rückhaltemerkmal ein hinterer Flansch ist, der sich von dem Längsabschnitt erstreckt und den Fuß (74) in Eingriff nimmt.

7. Rotoranordnung oder Turbinenabschnitt nach einem der Ansprüche 3 bis 6, wobei der Längsabschnitt (112) laterale Seiten (124) beinhaltet, die jeweils einen Längsvorsprung (124) aufweisen, der zwischen dem Fuß (74) und dem Laufrad (68) aufgenommen ist, wobei der Längsvorsprung (124) den Hitzeschild (106) von dem Laufrad (68) beabstandet, um den zweiten Durchlass (110;210) bereitzustellen.

8. Rotoranordnung oder Turbinenabschnitt nach einem der Ansprüche 1 bis 3, umfassend eine Abdeckung (196), die über einer Seite des Laufrads (68) befestigt ist, wobei die Abdeckung (196) das axiale Rückhaltemerkmal (414) bereitstellt.

9. Turbinenabschnitt nach einem der Ansprüche 2 bis 8, wobei der Turbinenabschnitt (28) eine Hochdruckturbine (54) und eine Niederdruckturbine (46), die stromabwärts von der Hochdruckturbine (54) angeordnet ist, beinhaltet, wobei die drehbare Stufe in der Hochdruckturbine (54) angeordnet ist.

10. Turbinenabschnitt nach Anspruch 9, wobei die Hochdruckturbine (54) eine erste und zweite Stufe beinhaltet, wobei die drehbare Stufe die erste Stufe bereitstellt.

11. Turbinenabschnitt nach Anspruch 9, wobei die Hochdruckturbine (54) eine erste und zweite Stufe beinhaltet, wobei die drehbare Stufe die zweite Stufe bereitstellt.

12. Verfahren zum Montieren einer drehbaren Turbinenstufe, wobei das Verfahren die folgenden Schritte umfasst:
Einsetzen eines Hitzeschilds (106, 206) in einen Schlitz (104) eines Laufrads (68);
Einbauen einer Laufschaufel (64) in den Schlitz (104), wobei der Hitzeschild (106, 206) in einen Hohlraum in dem Schlitz (104) zwischen einem Fuß (74) der Laufschaufel (64) und dem Laufrad (68) eingesetzt ist, wobei die Laufschaufel (64) einen Kühldurchlass (90) beinhaltet, der sich zu dem Fuß (74) erstreckt, wobei der Hitzeschild (106, 206) den Hohlraum in einen ersten Durchlass (108;208), der zu dem Fuß (70) benachbart ist, und einen zweiten Durchlass (110;210) an einer Seite des Hitzeschilds (106, 206) gegenüber von dem Fuß (74) unterteilt, wobei eine Kühlquelle (102) dazu konfiguriert ist, dem Kühldurchlass (90) über den ersten Durchlass (108; 208) ein Kühlfluid zuzuführen;
und **dadurch gekennzeichnet, dass** es ferner den folgenden Schritt umfasst
axiales Zurückhalten des Hitzeschilds (106, 206) in dem Schlitz (104) mit einem axialen Rückhaltemerkmal (114,118), das dazu konfiguriert ist, eine Strömung des Kühlfluids zu dem zweiten Durchlass (110; 210) zu blockieren.

13. Verfahren nach Anspruch 12, wobei der Schritt des Einsetzens Bewegen des Hitzeschilds (206) radial nach innen beinhaltet, damit ein vorderes axiales Rückhaltemerkmal in Bezug auf eine vordere Seite (92) des Laufrads (68) sitzt und ein hinteres axiales Rückhaltemerkmal in Bezug auf eine hintere Seite (94) des Laufrads (68) sitzt.

14. Verfahren nach Anspruch 13, wobei der Schritt des Einbauens axiales Verschieben des Fußes (74) in den Schlitz (104) und Aufnehmen von lateralen Seiten (124) des Hitzeschilds (106) zwischen dem Fuß (74) und dem Laufrad (68).

## Revendications

1. Ensemble rotor pour moteur à turbine à gaz comprenant :
un disque de rotor (68) avec une fente (104) ; et
une pale de rotor (64) ayant une emplanture (74) supportée à l'intérieur de la fente (104), dans lequel la pale (64) comprend un passage de refroidissement (90) qui s'étend jusqu'à l'emplanture (74) ;
un écran thermique (106, 206) agencé dans une cavité de la fente (104) entre l'emplanture (74) et le disque de rotor (68), dans lequel l'écran thermique (106, 206) sépare la cavité en un premier passage (108 ; 208) adjacent à l'emplanture (70) et à un second passage (110 ; 210) du côté de l'écran thermique (106, 206) opposé à l'emplanture (74) ;
une source de refroidissement (102) en communication fluidique avec le premier passage (108 ; 208), la source de refroidissement (102) étant configurée pour fournir un fluide de refroidissement au passage de refroidissement de pale (90) via le premier passage (108 ; 208) ;
**caractérisé en ce qu'**il comprend en outre
une fonction de retenue axiale (114, 218) configurée pour maintenir axialement l'écran thermique (106, 206) dans la fente (104) et configuré pour bloquer un écoulement du fluide de refroidissement vers le second passage (110 ; 210).

2. Section de turbine comprenant :
un étage de turbine rotatif qui comprend l'ensemble rotor de la revendication 1.

3. Ensemble rotor selon la revendication 1 ou section de turbine selon la revendication 2, dans lesquels le disque de rotor (68) a un côté avant (92) et un côté arrière (94), et l'écran thermique (106) comprend une partie longitudinale (112) qui s'étend du côté avant (92) au côté arrière (94).

4. Ensemble rotor ou section de turbine selon la revendication 3, dans lesquels la fonction de retenue axiale est une bride avant (118 ; 218) qui s'étend à partir de la partie longitudinale (112) et obstrue le second passage (110 ; 210).

5. Ensemble rotor ou section de turbine selon la revendication 3 ou 4, dans lesquels la fonction de retenue axiale est une bride arrière qui s'étend depuis la partie longitudinale (112) et vient en prise avec le côté arrière (94).

6. Ensemble rotor ou section de turbine selon la revendication 3 ou 4, dans lesquels la fonction de retenue axiale est une bride arrière qui s'étend depuis la partie longitudinale et vient en prise avec l'emplanture (74).

7. Ensemble rotor ou section de turbine selon l'une quelconque des revendications 3 à 6, dans lesquels la partie longitudinale (112) comprend des côtés latéraux (124) ayant chacun une saillie longitudinale (124) capturée entre l'emplanture (74) et le disque de rotor (68), la saillie longitudinale (124) créant un espace entre l'écran thermique (106) et le disque de rotor (68) pour former le second passage (110 ; 210).

8. Ensemble rotor ou section de turbine selon l'une quelconque des revendications 1 à 3, comprenant un couvercle (196) fixé sur un côté du disque de rotor (68), le couvercle (196) constituant la caractéristique de retenue axiale (414).

9. Section de turbine selon l'une quelconque des revendications 2 à 8, dans lesquels la section de turbine (28) comprend une turbine haute pression (54) et une turbine basse pression (46) qui est disposée en aval de la turbine haute pression (54), l'étage rotatif étant disposé dans la turbine haute pression (54).

10. Section de turbine selon la revendication 9, dans laquelle la turbine haute pression (54) comprend des premier et second étages, l'étage rotatif constituant le premier étage.

11. Section de turbine selon la revendication 9, dans laquelle la turbine haute pression (54) comprend des premier et second étages, l'étage rotatif constituant le second étage.

12. Procédé d'assemblage d'un étage de turbine rotatif, le procédé comprenant les étapes :
d'insertion d'un écran thermique (106, 206) dans une fente (104) d'un disque de rotor (68) ;
d'installation d'une pale (64) dans la fente (104), dans lequel l'écran thermique (106, 206) est inséré dans une cavité de la fente (104) entre une emplanture (74) de la pale (64) et le disque de rotor (68), la pale (64) comprenant un passage de refroidissement (90) qui s'étend jusqu'à l'emplanture (74), dans lequel l'écran thermique (106, 206) sépare la cavité en un premier passage (108 ; 208) adjacent à la racine (70) et un second passage (110 ; 210) sur un côté de l'écran thermique (106, 206) opposé à l'emplanture (74), dans lequel une source de refroidissement (102) est configurée pour fournir un fluide de refroidissement dans le passage de refroidissement (90) via le premier passage (108, 208) et **caractérisé en ce qu'**il comprend en outre l'étape
de retenue axiale de l'écran thermique (106, 206) dans la fente (104) avec une fonction de retenue axiale (114, 118) configurée pour bloquer un écoulement du fluide de refroidissement vers le second passage (110 ; 210).

13. Procédé selon la revendication 12, dans lequel l'étape d'insertion comprend le déplacement de l'écran thermique (206) radialement vers l'intérieur pour accueillir une fonction de retenue axiale en avant par rapport à un côté avant (92) du disque de rotor (68) et accueillir une fonction de retenue axiale vers l'arrière par rapport à un côté arrière (94) du disque de rotor (68).

14. Procédé selon la revendication 13, dans lequel l'étape d'installation fait coulisser axialement l'emplanture (74) dans la fente (104) et capture les côtés latéraux (124) de l'écran thermique (106) entre l'emplanture (74) et le disque de rotor (68).
